# EUROPEAN PATENT SPECIFICATION

(11) **EP 1 387 765 B1**
(45) Date of publication and mention of the grant of the patent: **19.12.2007**
(21) Application number: 02725930.8
(22) Date of filing: 06.05.2002
(51) Int. Cl.: B29C 65/14, B29D 17/00, B32B 27/16, B32B 37/00, B32B 7/12, G11B 7/26, H01J 61/32

(54) **DUAL LAMP SYSTEM AND METHOD FOR ITS USE FOR CORRECTION OF TILT OF OPTICAL STORAGE MEDIA**
DOPPELLAMPENSYSTEM SOWIE VERFAHREN ZU DESSEN VERWENDUNG ZUR NEIGUNGSKORREKTUR VON OPTISCHEN SPEICHERMEDIEN
SYSTEME A DEUX LAMPES ET PROCEDE D'UTILISATION POUR LA CORRECTION DE L'INCLINAISON DES SUPPORTS D'ENREGISTREMENT OPTIQUES

(30) Priority: 04.05.2001 US 288733 P; 25.03.2002 US 105797
(43) Date of publication of application: 11.02.2004
(73) Proprietor: XENON CORPORATION, Woburn, MA 01801-1006 (US)
(72) Inventor: PANICO, Richard, C., Medford, MA 02155 (US); PANICO, Louis, R., Danvers, MA 01923 (US)
(74) Representative: Cross, Rupert Edward Blount
(86) International application number: PCT/US2002/014201
(87) International publication number: WO 2002/090114

(56) References cited:
- EP-A- 0 189 905
- EP-A- 0 415 508
- EP-A- 0 810 592
- WO-A-84/00506
- DE-A1- 3 734 443
- US-A- 5 904 795
- US-B1- 6 406 770
- PATENT ABSTRACTS OF JAPAN vol. 1998, no. 05, 30 April 1998 (1998-04-30) -& JP 10 011818 A (USHIO INC), 16 January 1998 (1998-01-16)
- PATENT ABSTRACTS OF JAPAN vol. 1998, no. 04, 31 March 1998 (1998-03-31) -& JP 09 320131 A (DAINIPPON INK & CHEM INC), 12 December 1997 (1997-12-12)

## Description

The invention relates to a pulse lamp system.

### Background of the Invention

It is generally known to use pulsed light for aspects of manufacturing optical storage media, including for curing adhesive bonding between disks and for initialization. Known pulsed light systems generally include a power supply, a capacitor bank charged by the power supply, a pulse configuration circuit for shaping the height and width of a pulse, and a lamp. As indicated in the commonly assigned application published as WO 00/26029, the lamp can be a spiral lamp, particularly when used for processing optical media, such as CDs or DVDs.

EP-A-0415508 discloses a method and apparatus for continuous hardening of light-curing resins. The system shown include conveyors for moving an object. In one embodiment, halogen lamps are provided above and below to give relatively high flux density.

### Summary of the Invention

The invention provides a pulse lamp system as in claim 1, and a method for use with a pulse lamp system as in claim 8.

The system and method utilize two or more lamps, preferably operated from a single set of electronics, although some components may be used in common and others separately for each lamp. The two or more lamps can be discharged in a variety of sequences, including alternating sequences. With duplication of some or all electronics, cost and space requirements can be reduced.

The system and method may be used for different types of workpieces, such as and without limitation, optical storage media such as CDs and DVDs for curing a coating or for adhesive bonding. The system and method can be used for tilt management of DVDs or other workpieces by providing some degree of correction for a workpiece that has some degree of tilting or warping.

This method of dual (or more) lamps can also assists in high speed processing for semiconductors, flat panel displays, eyeglass lenses, and other products for which it may be desirable to provide a flash lamp to different sides of a product.

Embodiments of the present invention including a system for providing pulsed light to a workpiece with two or more lamps that can be separately triggered such that a pulse can be provided from one side one or more times followed by a pulse on the other side one or more times, with the pulse characteristics being the same or different from one pulse to the next. Examples also include a method of triggering one lamp for one or more pulses and then another lamp for one or more pulses (and potentially third or more lamps), and for providing such controls such that the pulses may be the same provided from one lamp to the other or different.

Embodiments and examples of the invention are described with reference to the drawings.

### Brief Description of the Drawings

FIG. 1 is a block diagram of a dual lamp system embodying the invention.
FIG. 2 shows an example of a set of pulses to multiple lamps.

### Description

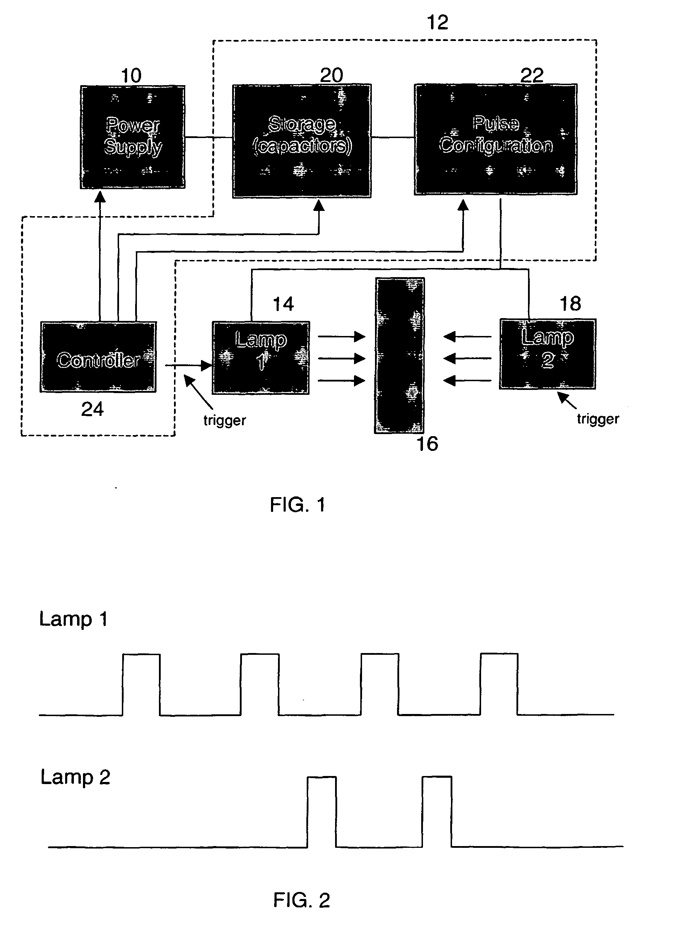

Referring to FIG. 1, an apparatus can include generally conventional flash lamp hardware, such as that used in a model RC-742 pulsed lamp system of the type sold by Xenon Corporation, located in Woburn, Massachusetts. The system includes a power supply 10, circuitry 12 for providing short duration pulses, and pulse lamps 14 and 18, which may include xenon gas. Circuitry 12 has energy storage (capacitor bank) 20, and pulse configuration circuitry 22. The lamps 14 and 18 are provided with separate triggers from a controller 24 that causes the lamps to provide pulses.

The lamp can be one of several types, and the shape of the lamp can be a conventional linear shape or shaped in a spiral. The lamp would generally reside in a housing and provide a pulse of light to a workpiece 16, such as an optical disk, such as a DVD. The pulse can be provided through a window that may filter some wavelengths of the pulse light, such as the infrared components to reduce heating of the workpiece. The lamp system may also include a conventional cooling mechanism, such as a fan, or the device could be air cooled.

With the use of two or more lamps, each separately triggered by a controller, such as a microprocessor, programmable logic array, or other logic, computing, or timing device, the lamps can be controlled to provide pulses in an alternating fashion - a pulse from the first lamp, then a pulse from the second lamp until a sufficient number of pulses have been used for the task. Rather than simple back and forth alternation, the system can provide for one lamp to have two or more pulses before the other has one or more pulses, or to provide a train of pulses to one side then alternate. FIG. 2 shows an example of a pattern with some successive pulses and alternation.

The pulses are preferably not provided simultaneously, although they could be for some applications. In the case of simultaneous use, there may be a need for more duplication of electronics, while the embodiment of FIG. 1 has substantially no duplication.

While the system has been described thus far as providing for alternate but identical pulses, by controlling the pulse configuration circuitry, a controller could cause a pulse having one characteristic to be provided from one lamp and a pulse having a different characteristic to be provided from another lamp in successive pulses.

The system can be used to help correct product deformation. In the area of DVDs, one type of deformation is referred to as tilt management, but the benefits could apply to any product that may have a bending or warping type of deformation. In the case of a DVD in which two substrates are bonded together and the adhesive for the bonding is cured through the use of pulsed light, tilt may be introduced in the bonding process, but also may be introduced earlier in the original manufacturing process when the substrates are manufactured. By alternating pulses in an appropriate manner, depending on the product and degree of tilt, that the tilt can be at least partially corrected. This correction can occur through the use of more pulses on one side, and then one or more pulses on the other, or by an alternating train of pulses.

These pulses can alter the concavity or convexity of the disk, and thus the system allows for correction of tilt introduced when the substrates are manufactured or bonded. By using inspection techniques, such as those similar for use with machine vision and inspection of parts, the system can determine the degree of warping and adjust the pulses accordingly.

The system used to provide tilt management is described as having many common components for multiple lamps, but alternatively, more of the components could be separate and separately controlled. There number of components in common is a function of cost, need, and desire for controlling parameters.

The system can be used for other processing in which pulsed light is desirable, such as in the manufacture of flat panel displays and eyeglass lenses.

The method can be used with conventional DVDs, and is not limited to any particular type of adhesive or DVD substrate. The methods thus assist in the high speed manufacture of DVDs.

Various modifications can be made to the described embodiment. For example, various parameters, materials, distances, powers and window materials are possible. Also use of a filter, and use of a heating plate beneath the disc or other supplemental heating or cooling are further possibilities.

## Claims

1. A pulse lamp system comprising:
a first lamp positioned on one side of a workpiece;
a second lamp positioned on another side of a workpiece; and
a control system for controlling each of the first and second lamps and operable to provide a pulse to the workpiece at different times.

2. The system of claim 1, wherein the control system includes a controller, a bank of capacitors, and pulse configuration circuitry, the controller causing a pulse with voltage from the capacitors and with a configuration defined by the pulse configuration circuitry.

3. The system of claim 1, wherein the control system causes the first and second lamps to provide pulses in an alternating manner.

4. The system of claim 3, wherein the control system is operable so that one pulse is provided by each lamp before a pulse is provided by the other lamp.

5. The system of claim 3, wherein the control system is operable so that multiple pulses are provided by one lamp before a pulse is provided by the other lamp.

6. The system of claim 1, wherein the control system is operable so that the lamps provide an unequal number of pulses.

7. A method for use with a pulse lamp system having a first lamp positioned on one side of a workpiece, and a second lamp positioned on another side of a workpiece; comprising causing each of the first and second lamps to provide a pulse to the workpiece at different times.

8. The method of claim 7, wherein the first and second lamps are caused to provide pulses in an alternating manner.

9. The method of claim 8, wherein one pulse is provided by each lamp before a pulse is provided by the other lamp.

10. The method of claim 8, wherein multiple pulses are provided by one lamp before a pulse is provided by the other lamp.

11. The method of claim 7, wherein the lamps provide an unequal number of pulses.

12. The method of claim 7, wherein the number and timing of pulses are selected to correct a warping in the workpiece.

13. The method of claim 7, wherein the workpiece is a DVD and the lamps are used to cure an adhesive between layers of the DVD.

## Patentansprüche

1. Ein Pulslampensystem, umfassend:
eine erste Lampe, positioniert auf einer Seite eines Werkstücks;
eine zweite Lampe, positioniert auf einer anderen Seite eines Werkstücks; und
ein Steuersystem zum Steuern der sowohl ersten als auch zweiten Lampe
und im Stande, an das Werkstück zu unterschiedlichen Zeiten einen Puls abzugeben.

2. Ein System nach Anspruch 1, wobei das Steuersystem einen Controler, eine Kondensatorbank und einen Pulskonfigurationsschaltkreis umfasst, wobei der Controler einen Puls erzeugt mit der Spannung aus den Kondensatoren und mit einer Konfiguration, die durch den Pulskonfigurationsschaltkreis definiert ist.

3. Das System nach Anspruch 1, wobei das Steuersystem veranlasst, dass die ersten und zweiten Lampen Pulse auf eine alternierende Weise abgeben.

4. Das System nach Anspruch 3, wobei das Steuersystem so betrieben werden kann, dass von jeder Lampe ein Puls abgegeben wird, bevor durch die andere Lampe ein Puls abgegeben wird.

5. Das System nach Anspruch 3, wobei das Steuersystem so betrieben werden kann, dass von einer Lampe mehrfache Pulse abgegeben werden, bevor durch die andere Lampe ein Puls abgegeben wird.

6. Das System nach Anspruch 1, wobei das Steuersystem so betrieben werden kann, dass die Lampe eine ungleiche Zahl von Pulsen abgegeben.

7. Ein Verfahren zur Benutzung mit einem Pulslampensystem mit einer ersten Lampe, die auf einer Seite eines Werkstücks positioniert ist, und einer zweiten Lampe, die auf einer anderen Seite eines Werkstücks positioniert ist; umfassend die Veranlassung, dass jede der ersten und zweiten Lampen zu unterschiedlichen Zeiten einen Puls auf das Werkstück abgibt.

8. Verfahren nach Anspruch 7, wobei die ersten und zweiten Lampen veranlasst werden, Pulse auf eine alternierende Art abzugeben.

9. Verfahren nach Anspruch 8, wobei von jeder Lampe ein Puls abgegeben wird, bevor von der anderen Lampe ein Puls abgegeben wird.

10. Verfahren nach Anspruch 8, wobei von einer Lampe mehrfache Pulse abgegeben werden, bevor von der anderen Lampe ein Puls abgegeben wird.

11. Verfahren nach Anspruch 7, wobei die Lampen eine ungleiche Zahl von Pulsen abgeben.

12. Verfahren nach Anspruch 7, wobei die Zahl und das Timing der Pulse ausgewählt werden, eine Verwerfung in dem Werkstück zu korrigieren.

13. Verfahren nach Anspruch 7, wobei das Werkstück eine DVD ist und die Lampen benutzt werden, um einen Kleber zwischen den Schichten der DVD zu härten.

## Revendications

1. Système de lampes à impulsions comprenant :
une première lampe positionnée d'un premier côté d'une pièce d'ouvrage ;
une deuxième lampe positionnée d'un autre côté d'une pièce d'ouvrage ; et
un système de commande destiné à commander chacune des première et deuxième lampes et pouvant être mis en oeuvre pour fournir une impulsion à la pièce d'ouvrage à des instants différents.

2. Système selon la revendication 1, dans lequel le système de commande comprend un contrôleur, une batterie de condensateurs, et des circuits de configuration d'impulsion, le contrôleur provoquant une impulsion ayant une tension provenant des condensateurs et ayant une configuration définie par les circuits de configuration d'impulsion.

3. Système selon la revendication 1, dans lequel le système de commande amène les première et deuxième lampes à fournir des impulsions d'une manière alternée.

4. Système selon la revendication 3, dans lequel le système de commande peut être mis en oeuvre de sorte qu'une impulsion soit fournie par chaque lampe avant qu'une impulsion ne soit fournie par l'autre lampe.

5. Système selon la revendication 3, dans lequel le système de commande peut être mis en oeuvre de sorte que de multiples impulsions soient fournies par une lampe avant qu'une impulsion ne soit fournie par l'autre lampe.

6. Système selon la revendication 1, dans lequel le système de commande peut être mis en oeuvre de sorte que les lampes fournissent un nombre inégal d'impulsions.

7. Procédé à utiliser avec un système de lampes à impulsions comportant une première lampe positionnée d'un premier côté d'une pièce d'ouvrage, et une deuxième lampe positionnée d'un autre côté d'une pièce d'ouvrage ; comprenant le fait d'amener chacune des première et deuxième lampes à fournir une impulsion à la pièce d'ouvrage à des instants différents.

8. Procédé selon la revendication 7, dans lequel les première et deuxième lampes sont amenées à fournir des impulsions d'une manière alternée.

9. Procédé selon la revendication 8, dans lequel une impulsion est fournie par chaque lampe avant qu'une impulsion ne soit fournie par l'autre lampe.

10. Procédé selon la revendication 8, dans lequel de multiples impulsions sont fournies par une première lampe avant qu'une impulsion ne soit fournie par l'autre lampe.

11. Procédé selon la revendication 7, dans lequel les lampes fournissent un nombre inégal d'impulsions.

12. Procédé selon la revendication 7, dans lequel le nombre et le cadencement des impulsions sont sélectionnés pour corriger un gauchissement dans la pièce d'ouvrage.

13. Procédé selon la revendication 7, dans lequel la pièce d'ouvrage est un disque DVD et les lampes sont utilisées pour polymériser un adhésif entre des couches du disque DVD.
